# EUROPÄISCHE PATENTANMELDUNG

(11) **EP 4 567 458 A1**
(43) Veröffentlichungstag der Anmeldung: **11.06.2025**
(21) Anmeldenummer: 24194277.0
(22) Anmeldetag: 13.08.2024
(51) Int. Cl.: G01S 7/41, G01S 7/48, B25J 9/00, F16P 3/14, G01S 17/04

(54) **SENSORANORDNUNG**

(30) Priorität: 07.12.2023 DE 202023107245 U
(71) Anmelder: Leuze electronic GmbH + Co. KG, 73277 Owen/Teck (DE)
(72) Erfinder: Eder, Alexander, 86928 Hofstetten (DE)
(74) Vertreter: Ruckh, Rainer Gerhard

(57) **Zusammenfassung**

Die Erfindung betrifft eine Sensoranordnung (1) mit wenigstens einem Sicherheitssensor (2), der für eine Schutzfeld-Überwachung ausgebildet ist. In einer Speichereinheit sind mehrere Schutzfelder (4) abgespeichert, welchen jeweils ein Warnfeld (4a) vorgelagert ist oder welchen jeweils eine Referenzkontur (5) zugeordnet ist. In einem Einlernbetrieb werden mittels einer Rechnereinheit die gespeicherten Schutzfelder (4) im Sicherheitssensor (2) nacheinander aktiviert, bis mit einem aktivierten Schutzfeld (4) in dessen zugeordnetem Warnfeld (4a) ein Objekt (9) erkannt wird oder ein mit dessen Referenzkontur (5) übereinstimmendes Objekt (9) erkannt wird. Dieses Schutzfeld (4) wird für einen auf den Einlernbetrieb folgenden Arbeitsbetrieb im Sicherheitssensor (2) übernommen.

## Beschreibung

Die Erfindung betrifft eine Sensoranordnung.

Derartige Sensoranordnungen umfassen generell einen Sicherheitssensor, der insbesondere als optischer Flächendistanzsensor ausgebildet sein kann.

Ein Flächendistanzsensor weist typischerweise einen Distanzsensor mit einem Lichtstrahlen emittierenden Sender und einem Lichtstrahlen empfangenden Empfänger auf. Die Lichtstrahlen des Senders werden periodisch in einen Winkelbereich abgelenkt und tasten so in einzelnen Scans einen Überwachungsbereich ab.

Derartige Sicherheitssensoren werden generell im Bereich der Sicherheitstechnik eingesetzt und weisen einen entsprechend fehlersicheren Aufbau auf.

Ein Anwendungsbereich eines solchen Sicherheitssensors ist die Gefahrenbereichsüberwachung an einer gefahrbringenden Anlage. In diesem Fall ist im Sicherheitssensor ein Schutzfeld hinterlegt, das an den Gefahrenbereich der Anlage angepasst ist. Mit dem Sicherheitssensor erfolgt dann eine Objektdetektion derart, dass abhängig davon, ob im Schutzfeld ein Objekt erfasst wird oder nicht, ein binäres Objektfeststellungssignal generiert wird, dessen Schaltzustände angeben, ob sich ein Objekt im Schutzfeld befindet oder nicht. Wird ein Objekt im Schutzfeld erfasst und ein entsprechendes Objektfeststellungssignal generiert, wird dadurch eine Sicherheitsfunktion derart ausgelöst, dass die Anlage stillgesetzt wird.

In weiteren Anwendungen kann mit dem Sicherheitssensor ein Zutrittsschutz realisiert werden. In diesem Fall ist das Schutzfeld des Sicherheitssensors an eine Zutrittsöffnung zu einem Gefahrenbereich angepasst.

Generell besteht das Problem bei derartigen Sensoranordnungen darin, das Schutzfeld des Sicherheitssensors an die jeweilige Applikation genau anzupassen. Einerseits kann die Umgebung, in die das Schutzfeld eingepasst werden muss, komplex sein, so dass z.B. eine rechnerische Vorgabe oft ungenau ist. Weiterhin können sich applikationsspezifische Gegebenheiten ändern, wodurch eine Vorgabe eines geeigneten Schutzfelds weiter erschwert ist.

Der Erfindung liegt die Aufgabe zugrunde eine Sensoranordnung der eingangs genannten Art bereitzustellen, welche bei konstruktiv geringem Aufwand eine hohe Funktionalität aufweist.

Zur Lösung dieser Aufgabe sind die Merkmale der unabhängigen Ansprüche vorgesehen, vorteilhafte Ausführungsformen und zweckmäßige Weiterbildungen der Erfindung sind in den abhängigen Ansprüchen beschrieben.

Die Erfindung betrifft eine Sensoranordnung mit wenigstens einem Sicherheitssensor, der für eine Schutzfeld-Überwachung ausgebildet ist. In einer Speichereinheit sind mehrere Schutzfelder abgespeichert, welchen jeweils ein Warnfeld vorgelagert ist oder welchen jeweils eine Referenzkontur zugeordnet ist. In einem Einlernbetrieb werden mittels einer Rechnereinheit die gespeicherten Schutzfelder im Sicherheitssensor nacheinander aktiviert, bis mit einem aktivierten Schutzfeld in dessen zugeordnetem Warnfeld ein Objekt erkannt wird oder ein mit dessen Referenzkontur übereinstimmendes Objekt erkannt wird. Dieses Schutzfeld wird für einen auf den Einlernbetrieb folgenden Arbeitsbetrieb im Sicherheitssensor übernommen.

Die erfindungsgemäße Sensoranordnung kann in sicherheitstechnischen Applikationen eingesetzt werden, wobei hierzu die Komponenten der Sensoranordnung einen entsprechenden fehlersicheren Aufbau aufweisen.

Die erfindungsgemäße Sensoranordnung weist wenigstens einen Sicherheitssensor auf, mit dem eine Schutzfeldüberwachung durchgeführt wird, wobei das entsprechende Schutzfeld vorteilhaft ein flächiger Bereich ist. Jedoch kann das Schutzfeld auch ein räumlicher Bereich sein.

Ein wesentlicher Aspekt der Erfindung besteht darin, dass in einem Einlernbetrieb ein optimal an die Umgebung bzw. die aktuelle Applikationsumgebung angepasstes Schutzfeld selbsttätig ausgewählt wird, wobei dieses Schutzfeld dann in einen Arbeitsbetrieb des Sicherheitssensors und damit der Sensoranordnung übernommen wird.

Generell wird mit dem Sicherheitssensor der erfindungsgemäßen Sensoranordnung ein Flächen- oder Raumbereich überwacht, innerhalb dessen Gefahren für Personen ausgehen können. Insbesondere wird mit dem Sicherheitssensor das Umfeld einer Anlage überwacht, von welcher Gefahren für Personen ausgehen können.

Derartige Flächen- oder Raumbereiche sind generell durch Gegenstände, insbesondere stationäre Gegenstände wie Wände, Pfeiler, Maschinenteile und dergleichen begrenzt.

Damit Fehldetektionen mit dem Sicherheitssensor vermieden werden, ist dieses Schutzfeld zu dimensionieren, dass zwar möglichst der gesamte Flächen- oder Raumbereich vom Schutzfeld erfasst wird, jedoch die vorgenannten Gegenstände vom Schutzfeld ausgespart sind.

Diese Aufgabe wird bei der erfindungsgemäßen Sensoranordnung auf einfache Weise erfüllt.

Hierzu sind in einer Speichereinheit mehrere unterschiedliche Schutzfelder abgespeichert. Wesentlich ist, dass jedem Schutzfeld ein Warnfeld oder eine Referenzkontur zugeordnet ist.

Das Warnfeld ist dem jeweiligen Schutzfeld unmittelbar vorgelagert. Vorteilhaft grenzt jedes Warnfeld an wenigstens einen Abschnitt des Randes des jeweiligen Schutzfelds direkt an.

Die Referenzkontur liegt außerhalb des Schutzfelds, schließt jedoch an einen Rand des jeweiligen Schutzfelds direkt an.

Die Auswahl eines Schutzfelds aus der Anzahl der gespeicherten Schutzfelder erfolgt nach einem Try and error-Verfahren während des Einlernbetriebs.

Die Schutzfelder werden nacheinander im Sicherheitssensor aktiviert. Im Sicherheitssensor wird dann eine Objektdetektion durchgeführt. Wird ein Objekt im Warnfeld des Schutzfelds oder mit der Referenzkontur nicht erkannt, wird das Schutzfeld verworfen und ein neues Schutzfeld ausgewählt.

Dieser Vorgang wird solange wiederholt, bis für ein aktiviertes Schutzfeld im Warnfeld ein Objekt erkannt wird oder ein Objekt als übereinstimmend mit der Referenzkontur erkannt wird. Dieses Schutzfeld wird dann für den nachfolgenden Arbeitsbetrieb des Sicherheitssensors ausgewählt.

Dabei wird vorteilhaft ein Objekt mit der Referenzkontur als übereinstimmend erkannt, wenn dessen Objektkontur innerhalb vorgegebener Toleranzgrenzen mit der Referenzkontur übereinstimmt.

Dabei gilt weiterhin ein Objekt innerhalb der Referenzkontur als erkannt gilt, wenn dieses außerhalb des Schutzfelds liegt und die vom Objekt stammenden Messwerte des Sicherheitssensors nicht weiter als ein vorgegebener Grenzwert vom Rand des Schutzfelds entfernt liegen.

Der Grenzwert kann vorteilhaft im Bereich von 200mm bis 300mm liegen.

Durch dieses Auswahlverfahren ist gewährleistet, dass das Schutzfeld bestmöglich an die jeweiligen Umgebungsbedingungen angepasst ist.

Die Anpassung ist dabei derart, dass das größtmögliche Schutzfeld ausgewählt wird, das möglichst direkt bis an Begrenzungen wie Wände, Böden, Maschinenteile und dergleichen anschließt, da diese Begrenzungen innerhalb des Warnfelds oder mit der Referenzkontur erkannt werden.

Durch die optimierte Auswahl des Schutzfelds ist auch eine Optimierung der Überwachungsfunktion des Sicherheitssensors gewährleistet, da mit diesem das größtmögliche Schutzfeld überwacht wird.

Der Sicherheitssensor ist vorteilhaft ein optischer Flächendistanzsensor, eine 3D-Kamera oder ein Radarsensor.

Generell weist der Sicherheitssensor einen fehlersicheren Aufbau auf, was insbesondere durch eine mehrkanalige Auswerteeinheit zur Auswertung von Sensorsignalen realisiert wird.

Prinzipiell können die Speichereinheit und eine zugeordnete Rechnereinheit, die zur Auswahl eines Schutzfelds benötigt werden, im Sicherheitssensor selbst integriert sein.

Gemäß einer vorteilhaften Ausführungsform weist die Sensoranordnung eine Sicherheitssteuerung auf, in welcher die Speichereinheit und die Rechnereinheit integriert sind.

Auch die Sicherheitssteuerung weist einen fehlersichern Aufbau auf, was durch eine mehrkanalige Rechnerstruktur realisiert werden kann.

Die Sicherheitssteuerung steuert den oder jeden Sicherheitssensor der Sensoranordnung. Die Sicherheitssteuerung dient vorteilhaft auch zur Steuerung einer Anlage, die mit dem oder den Sicherheitssensoren überwacht wird.

Die Überwachungsfunktion ist dann derart, dass der Sicherheitssensor als Objektfeststellungssignal ein Schaltsignal generiert, dessen Schaltzustände angeben, ob sich ein Objekt im Schutzfeld befindet oder nicht. Dieses Schaltsignal wird in die Sicherheitssteuerung eingelesen. Wird mit dem Sicherheitssensor ein Objekt im Schutzfeld erkannt, wird in der Sicherheitssteuerung eine Sicherheitsfunktion ausgelöst, die die Anlage in einen sicheren Zustand überführt. Insbesondere wird die Anlage stillgesetzt.

Gemäß einer vorteilhaften Ausführungsform wird mit der Sensoranordnung ein Zutrittsschutz durchgeführt.

In diesem Fall wird mit dem Schutzfeld des wenigstens einen Sicherheitssensors in dessen Arbeitsbetrieb eine Zutrittsöffnung zu einem Gefahrenbereich an einer Anlage überwacht. Mit der Sensoranordnung wird eine Sicherheitsfunktion ausgelöst, die die Anlage stillsetzt, wenn innerhalb des Schutzfelds ein Objekt registriert wird.

Dabei ist die Zutrittsöffnung von einem Boden begrenzt. Der wenigstens eine Sicherheitssensor ist so angeordnet, dass mit diesem der Boden erfassbar ist.

In diesem Fall ist für den Arbeitsbetrieb des wenigstens einen Sicherheitssensors das Schutzfeld ausgewählt, für welches mit dessen Warnfeld oder mit der zugeordneten Referenzkontur der Boden erfasst wird.

Dadurch, dass mit dem erfindungsgemäßen Auswahlverfahren das Schutzfeld für den Arbeitsbetrieb ausgewählt wird, für welches im zugeordneten Warnfeld der Boden als Objekt erkannt wird, oder der Boden als mit der dem Schutzfeld zugeordneten Referenzkontur als übereinstimmend erkannt wird, erstreckt sich das Schutzfeld bis direkt vor den Boden, so dass mit dem Schutzfeld die gesamte Zutrittsöffnung erfasst wird.

Eine besonders vorteilhafte Ausgestaltung ist dadurch gekennzeichnet, dass mit weiteren Sicherheitssensoren der Gefahrenbereich überwacht wird. Ein automatischer Wiederanlauf der Anlage wird durchgeführt, wenn nach einem Objekteingriff im Schutzfeld dieses Schutzfeld wieder frei wird und wenn mit den weiteren Sicherheitssensoren kein Objekteingriff im Gefahrenbereich detektiert wird.

Da mit den weiteren Sicherheitssensoren kein Objekt im Gefahrenbereich erkannt wird, ist sichergestellt, dass sich keine Person im Gefahrenbereich aufhält, wenn das Schutzfeld wieder frei wird, so dass dann ohne weitere Sicherheitsmaßnahmen die Anlage wieder gestartet werden kann.

Für den Fall, dass der Gefahrenbereich nicht mit weiteren Sicherheitssensoren überwacht wird, ist es aus Sicherheitsgründen erforderlich, dass ein Wiederanlauf der Anlage durch einen Benutzer durchgeführt wird.

Ein Zutrittsschutz kann mit der erfindungsgemäßen Sensoranordnung auch für den Fall realisiert werden, dass in der Zutrittsöffnung auf dem Boden Objekte gelagert sind. Das Schutzfeld wird für den Arbeitsbetrieb des wenigstens einen Sicherheitssensors ausgewählt, dass mit dessen Warnfeld oder mit dessen zugeordneter Referenzkontur die Objekte zusammen mit dem Boden erfasst werden.

Die Objekte weisen dabei vorbestimmte Geometrien auf.

Insbesondere sind die Objekte quaderförmig und mit definierten Lücken voneinander getrennt.

Um Abschattungen bei der Objekterkennung zu vermeiden ist es zweckmäßig, wenn an der Oberseite wenigstens zwei seitlich versetzte Sicherheitssensoren angeordnet sind, die aus verschiedenen Blickwinkeln die Zutrittsöffnung überwachen. Für diese Sicherheitssensoren ist dann ein gemeinsames Schutzfeld aktiviert.

Gemäß einer weiteren vorteilhaften Ausführungsform wird mit dieser eine Flächenabsicherung durchgeführt.

Insbesondere kann mit dem oder den Sicherheitssensoren ein horizontaler Flächenbereich überwacht werden, um möglichst vollständig einen Gefahrenbereich zu überwachen.

Hierzu sind vorteilhaft in der Speichereinheit an einen Gefahrenbereich angepasste Schutzfelder abgespeichert.

Im Gefahrenbereich kann eine Anlage vorhanden sein, von der Gefahren für diese Personen ausgehen können. Weiterhin können im Gefahrenbereich nichtsicherheitskritische Objekte angeordnet sein, von welchen keine Gefahren für Personen ausgehen. Ein Beispiel für ein solches nichtsicherheitskritisches Objekt ist ein AGV (Automatic Guided Vehicle), das im Gefahrenbereich abgestellt ist.

Die Funktionsweise der Sensoranordnung ist dann derart, dass bei wenigstens einem im Gefahrenbereich vorhandenen nichtsicherheitskritischen Objekt für den oder jeden Sicherheitssensor das Schutzfeld für den Arbeitsbetrieb ausgewählt wird. Mit dessen zugeordnetem Warnfeld oder dessen zugeordneter Referenzkontur wird das nichtsicherheitskritische Objekt erfasst.

Das Schutzfeld ist durch das erfindungsgemäße Auswahlverfahren so dimensioniert, dass es direkt bis an das nichtsicherheitskritische Objekt heranreicht, so dass sich kein sicherheitskritisches Objekt wie eine Person unbemerkt zwischen dem Rand des Schutzfelds und dem nichtsicherheitskritischen Objekt aufhalten kann.

Generell wird das nichtsicherheitskritische Objekt vom Schutzfeld ausgespart. Vorteilhaft weist dabei die Sensoranordnung mehrere räumlich versetzte Sicherheitssensoren auf, die aus unterschiedlichen Blickwinkeln den Gefahrenbereich überwachen. Dadurch werden Abschattungen bei Objektdetektion, insbesondere bei der Detektion eines nichtsicherheitskritischen Objekts, vermieden.

Die Funktionsweise der Sensoranordnung ist in diesem Fall derart, dass mit dieser der Betrieb einer Anlage nur dann freigegeben wird, wenn in den Schutzfeldern des oder jedes Sicherheitssensors kein sicherheitskritisches Objekt registriert wird. Bei einer Fehlfunktion der Anlage oder bei Erfassen eines sicherheitskritischen Objekts wird in den Schutzfeldern des oder jedes Sicherheitssensors eine Sicherheitsfunktion generiert, mit der die Anlage stillgesetzt wird.

Ein automatischer Wiederanlauf der Anlage erfolgt, wenn bei einer Anwesenheitskontrolle im Gefahrenbereich mittels der Sicherheitssensoren kein sicherheitskritisches Objekt detektiert wird.

Die Erfindung wird im Folgenden anhand der Zeichnungen erläutert. Es zeigen:
- Figur 1:: Schematische Darstellung eines Ausführungsbeispiels der erfindungsgemäßen Sensoranordnung.
- Figur 2:: Schutzfeld des Sicherheitssensors gemäß Figur 1 mit einem zugeordneten Warnfeld.
- Figur 3:: Schutzfeld des Sicherheitssensors gemäß Figur 1 mit einer zugeordneten Referenzkontur.
- Figur 4:: Erstes Beispiel eines Sicherheitssensors der erfindungsgemäßen Sensoranordnung.
- Figur 5:: Zweites Beispiel eines Sicherheitssensors der erfindungsgemäßen Sensoranordnung.
- Figur 6:: Drittes Beispiel eines Sicherheitssensors der erfindungsgemäßen Sensoranordnung.
- Figur 7:: Beispiel eines Zutrittsschutzes mit der erfindungsgemäßen Sensoranordnung.
- Figur 8:: Schematische Darstellung eines Sicherheitssensors an der Oberseite einer Zutrittsöffnung für die Anordnung gemäß Figur 7.
- Figur 9:: Variante der Anordnung gemäß Figur 8 mit zwei Sicherheitssensoren.
- Figur 10:: Beispiel einer Flächenabsicherung mit der erfindungsgemäßen Sensoranordnung
a) mit einem AGV in einem Gefahrenbereich
b) mit zwei AGV im Gefahrenbereich

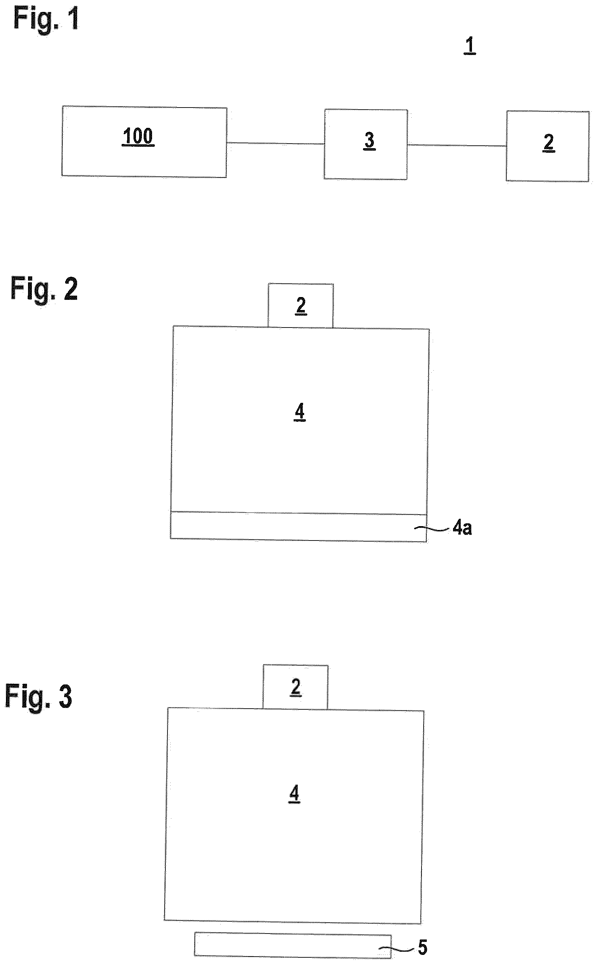

Figur 1 zeigt ein Ausführungsbeispiel der erfindungsgemäßen Sensoranordnung 1, die im vorliegenden Fall einen Sicherheitssensor 2 und eine Sicherheitssteuerung 3 umfasst. Die Sicherheitssteuerung 3 erhält als Ausgangssignal des Sicherheitssensors 2 ein Objektfeststellungssignal, insbesondere Schaltsignal. Abhängig hiervon steuert die Sicherheitssteuerung 3 eine Anlage 100, von der Gefahren für Personen ausgehen können. Generell kann die Sensoranordnung 1 auch mehrere Sicherheitssensoren 2 umfassen. Sowohl der Sicherheitssensor 2 als auch die Sicherheitssteuerung 3 weisen einen fehlersicheren Aufbau auf, der insbesondere durch mehrkanalige Rechnerstrukturen realisiert werden kann.

Mit dem Sicherheitssensor 2 erfolgt generell eine Schutzfeldüberwachung, wobei die Figuren 2 und 3 ein flächiges, rechteckiges Schutzfeld 4 zeigen, das mit dem Sicherheitssensor 2 überwacht wird. Generell kann das Schutzfeld 4 auch ein räumlicher Bereich sein.

Bei der Ausführungsform gemäß Figur 2 ist dem Schutzfeld 4 ein Warnfeld 4a vorgelagert. Das Warnfeld 4a schließt direkt an einen Teil des Rands des Schutzfelds 4 an. Prinzipiell kann sich das Schutzfeld 4 auch entlang des gesamten Randes des Schutzfelds 4 erstrecken.

Bei der Ausführungsform gemäß Figur 3 ist dem Schutzfeld 4 eine Referenzkontur 5 zugeordnet. Die Referenzkontur 5 liegt vorteilhaft in einem geringen Abstand, der z. B. 200 mm bis 300 mm betragen kann, vor dem Rand des Schutzfelds 4.

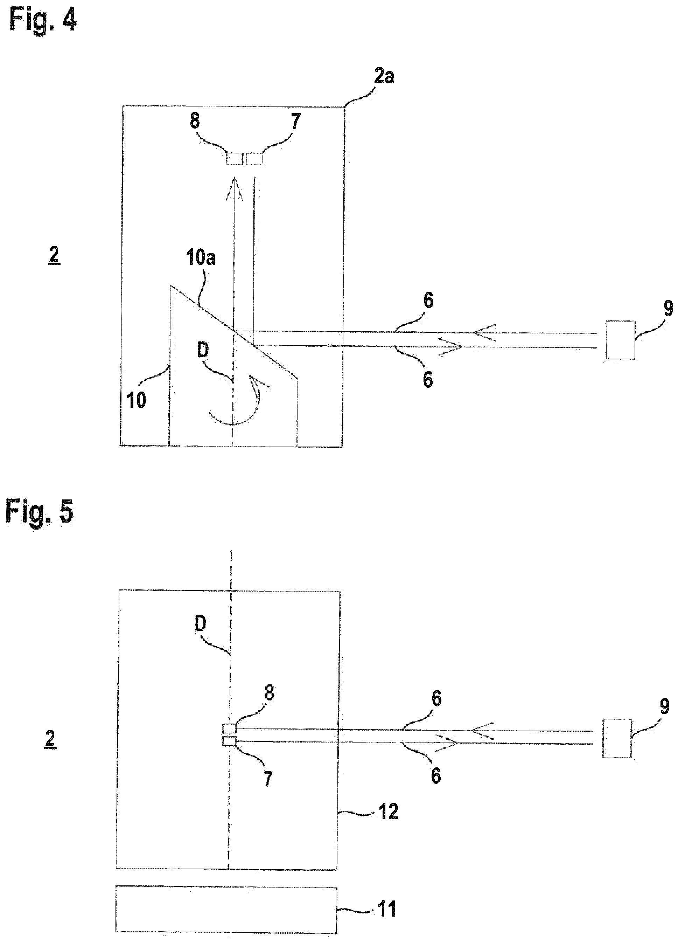

Figur 4 zeigt einen Sicherheitssensor 2 in Form eines optischen Flächendistanzsensors. Der Flächendistanzsensor weist einen in einem Gehäuse 2a stationär angeordneten Distanzsensor mit einem Lichtstrahlen 6 emittierenden Sender 7 und einem Lichtstrahlen 6 empfangenden Empfänger 8 auf. Der Sender 7 ist beispielsweise von einer Laserdiode gebildet, der Empfänger 8 von einer APD (Avalanche-Photodiode). Die Bestimmung der Distanzen von Objekten 9 erfolgt beispielsweise nach einem Puls-Laufzeit-Verfahren, wobei hierzu der Sender 7 Lichtstrahlen 6 in Form von Lichtpulsen emittiert. Die vom Sender 7 emittierten Lichtstrahlen 6 wie auch die von einem zu detektierenden Objekt 9 zurückreflektierten Lichtstrahlen 6 werden über eine Spiegelfläche 10a einer Ablenkeinheit 10 geführt. Durch die Drehbewegung der motorisch getriebenen Ablenkeinheit 10 um eine Drehachse D werden die Lichtstrahlen 6 in einem Winkelbereich abgelenkt. Durch Ermittlung der Distanzen mit dem Distanzsensor und durch die Ermittlung der aktuellen Ablenkpositionen können Positionen von Objekten 9 insbesondere innerhalb eines Schutzfelds 4 erfasst werden.

Figur 5 zeigt eine Variante des Flächendistanzsensors gemäß Figur 4. Der Flächendistanzsensor gemäß Figur 3 unterscheidet sich vom Flächendistanzsensor gemäß Figur 2 dadurch, dass der Sender 7 und Empfänger 8 des Distanzsensors in einem auf einem Sockel 11 gelagerten, um eine Drehachse D drehbaren Messkopf 12 gelagert sind.

Bei den Flächendistanzsensoren der Figuren 4 und 5 wird mit den Lichtstrahlen 6 durch deren Ablenkbewegung ein flächiger Überwachungsbereich mit einer Folge von Scans periodisch abgetastet.

Anstelle eines optischen Sensors kann der Sicherheitssensor 2 auch als Radarsensor ausgebildet sein, der einen zu den Figuren 4 und 5 entsprechenden Aufbau aufweisen kann.

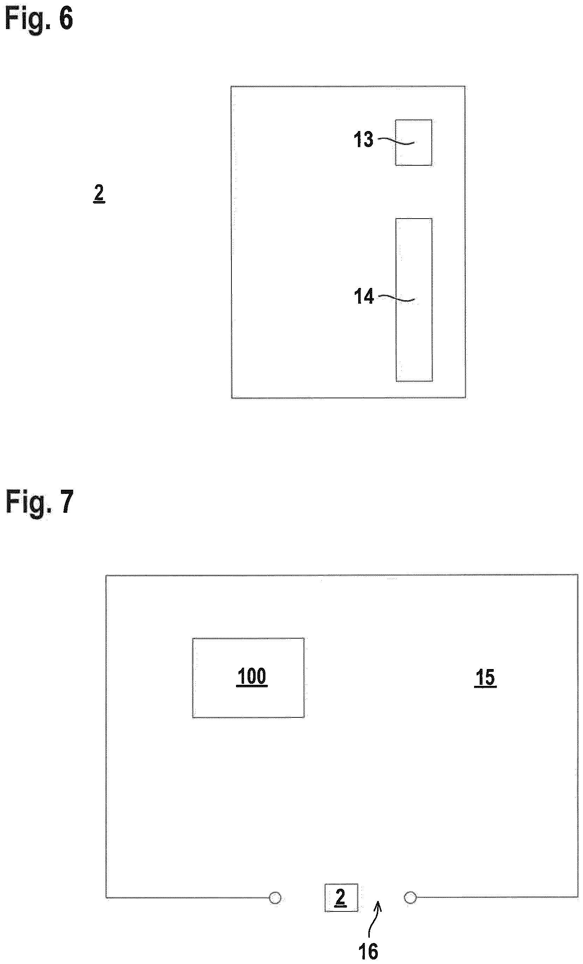

Figur 6 zeigt einen Sicherheitssensor 2 in Form einer 3D-Kamera. Dieser Sicherheitssensor 2 weist eine Sendelicht emittierende Sendereinheit 13 und einen Bildsensor 14 mit einer matrixförmigen Anordnung von Pixeln auf. Der Bildsensor 14 kann von einem CCD- oder CMOS-Array gebildet sein. Für jedes Pixel werden Distanzmessungen durchgeführt, insbesondere nach einem Puls-Laufzeit-Verfahren.

Der Sicherheitssensor 2 weist eine nicht dargestellte Auswerteeinheit auf, in welcher aus Sensorsignalen der Sensorkomponenten ein Objektfeststellungssignal generiert wird. Das Objektfeststellungssignal ist vorteilhaft als binäres Schaltsignal ausgebildet, dessen Schaltzustände angeben, ob sich ein Objekt 9 im Schutzfeld 4 befindet oder nicht. Die Auswerteeinheit ist dadurch fehlersicher ausgebildet, dass sie aus zwei sich gegenseitig überwachenden Rechnereinheiten besteht.

Wird mit dem Sicherheitssensor 2 ein Objekt 9 im Schutzfeld 4 erkannt, wird durch das dadurch generierte Schaltsignal in der Sicherheitssteuerung 3 eine Sicherheitsfunktion ausgelöst, insbesondere die Anlage 100 stillgesetzt.

Erfindungsgemäß sind in einer Speichereinheit mehrere Schutzfelder 4 abgespeichert, welchen jeweils ein Warnfeld 4a (Figur 2) vorgelagert ist, oder welchen jeweils eine Referenzkontur 5 (Figur 3) zugeordnet ist.

In einem Einlernbetrieb werden mittels einer Rechnereinheit die gespeicherten Schutzfelder 4 im Sicherheitssensor 2 nacheinander aktiviert, bis mit einem aktivierten Schutzfeld 4 in dessen zugeordnetem Warnfeld 4a ein Objekt 9 erkannt wird oder ein mit der Referenzkontur 5 übereinstimmendes Objekt 9 erkannt wird, wobei dieses Schutzfeld 4 für einen auf den Einlernbetrieb folgenden Arbeitsbetrieb im Sicherheitssensor 2 übernommen wird.

Die Rechnereinheit und die Speichereinheit sind vorteilhaft Bestandteil der Sicherheitssteuerung 3.

Vorteilhaft gilt ein Objekt 9 mit der Referenzkontur 5 als übereinstimmend erkannt, wenn dessen Objektkontur innerhalb vorgegebener Toleranzgrenzen mit der Referenzkontur 5 übereinstimmt.

Weiterhin gilt ein Objekt 9 innerhalb der Referenzkontur 5 als erkannt, wenn dieses außerhalb des Schutzfelds 4 liegt und die vom Objekt 9 stammenden Messwerte des Sicherheitssensor 2 nicht weiter als ein vorgegebener Grenzwert vom Rand des Schutzfeld 4 entfernt liegen.

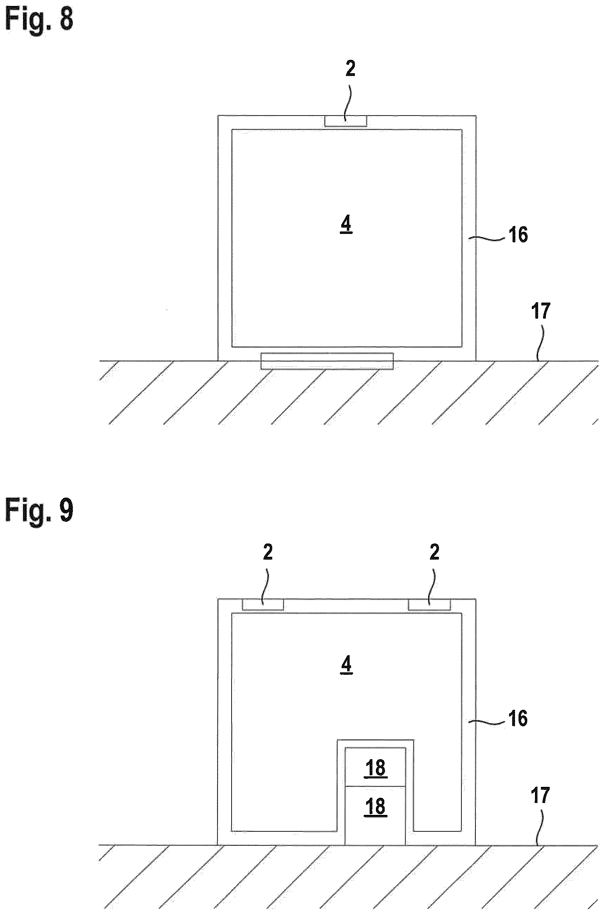

Die Figuren 7 und 8 zeigen ein Ausführungsbeispiel der erfindungsgemäßen Sensoranordnung 1 zur Gewährleistung eines Zutrittschutzes.

In diesem Fall befindet sich die Anlage 100 in einem umzäunten Gefahrenbereich 15, wobei ein Zutritt zum Gefahrenbereich 15 nur über eine Zutrittsöffnung 16 erfolgen kann. An der Oberseite der Zutrittsöffnung 16 befindet sich ein Sicherheitssensor 2, der im vorliegenden Fall als Flächendistanzsensor ausgebildet ist. Die Lichtstrahlen 16 des Flächendistanzsensors sind auf einen die Zutrittsöffnung 16 an der Unterseite begrenzenden Boden 17 gerichtet.

Im Einlernbetrieb wird für den Sicherheitssensor 2 das Schutzfeld 4 ausgewählt, in dessen Referenzkontur 5 der Boden 17 als Objekt 9 erkannt wird, wie in Figur 8 veranschaulicht. Das so ausgewählte Schutzfeld 4 ist optimal an die Zutrittsöffnung 16 angepasst, so dass mit dem Schutzfeld 4 die Zutrittsöffnung 16 vollständig überwacht werden kann. Dieses Schutzfeld 4 wird für den Arbeitsbetrieb des Sicherheitssensors 2 übernommen.

Dringt ein Objekt 9 (in Figur 8 nicht dargestellt) in das Schutzfeld 4 ein, so wird durch das dadurch generierte Schaltsignal eine Sicherheitsfunktion in der Sicherheitssteuerung 3 ausgelöst, mit der die Anlage 100 stillgesetzt wird.

Gemäß einer vorteilhaften Weiterbildung wird mit weiteren nicht dargestellten Sicherheitssensoren 2 der Gefahrenbereich 15 überwacht. In diesem Fall wird ein automatischer Wiederanlauf der Anlage 100 durchgeführt, wenn nach einem Objekteingriff im Schutzfeld 4 dieses Schutzfeld 4 wieder frei wird und wenn mit den weiteren Sicherheitssensoren 2 kein Objekteingriff im Gefahrenbereich 15 detektiert wird.

Für den Fall, dass der Gefahrenbereich 15 nicht mit weiteren Sicherheitssensoren 2 überwacht wird, muss ein Wiederanlauf der Anlage 100 durch einen Benutzer durchgeführt werden.

Figur 9 zeigt eine Variante der Anordnung gemäß Figur 8. Bei der Anordnung gemäß Figur 9 sind zwei Sicherheitssensoren 2 in Form von Flächendistanzsensoren an der Oberseite der Zutrittsöffnung 16 so angeordnet, dass deren Lichtstrahlen 6 auf den Boden 17 gerichtet sind.

Im vorliegenden Fall können in der Zutrittsöffnung 16 quaderförmige Objekte, insbesondere Kisten 18 angeordnet sein.

Durch das erfindungsgemäße Auswahlverfahren von Schutzfeldern 4, denen Warnfelder 4a oder Referenzkonturen 5 zugeordnet sind, wird das in Figur 9 dargestellte optimierte Schutzfeld 4 ausgewählt, bei welchem der Boden 17 und die Kisten 18 ausgespart sind.

Die Überwachungsfunktion der Sensoranordnung 1 ist anlog zu dem Beispiel der Figuren 7 und 8. Ein Wiederanlauf der Anlage 100 ist nur mit zusätzlichen Sicherheitsmaßnahmen möglich.

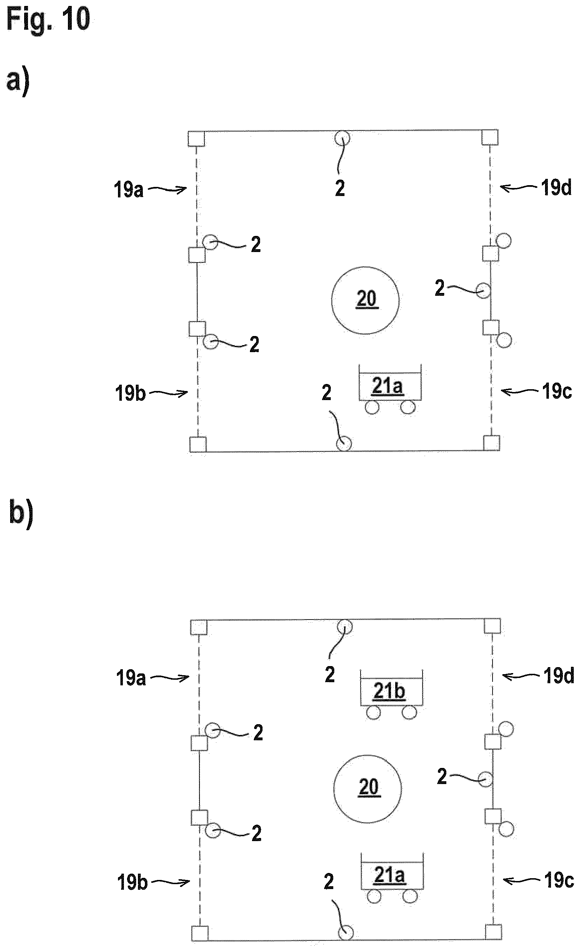

Die Figuren 10a, 10b zeigen ein Ausführungsbeispiel, bei dem mit der erfindungsgemäßen Sensoranordnung 1 eine Flächenabsicherung durchgeführt wird.

Bei der Anordnung der Figuren 10a, 10b ist ein teilumzäunter Gefahrenbereich 15 vorhanden, dessen offene Seiten mit Lichtvorhängen 19a bis 19d abgesichert werden.

Im Gefahrenbereich 15 befindet sich ein die Anlage 100 bildender Roboter 20.

Der Gefahrenbereich 15 wird in einer horizontalen Ebene mit mehreren Sicherheitssensoren 2 in Form von Flächendistanzsensoren überwacht.

Bei der Anordnung gemäß Figur 10a ist ein AGV 21a im Gefahrenbereich 15 abgestellt.

Bei der Anordnung gemäß Figur 10b sind zwei AGV 21a, b im Gefahrenbereich 15 abgestellt.

Die AGV 21a, b sind nichtsicherheitskritische Objekte 9, von denen keine Gefahren für Personen ausgehen.

Durch das erfindungsgemäße Auswahlverfahren von Schutzfeldern 4, denen jeweils ein Warnfeld 4a oder eine Referenzkontur 5 zugeordnet ist, wird das Schutzfeld 4 so dimensioniert, dass das oder jedes AGV 21a, b vom Schutzfeld 4 ausgespart ist. Dabei liegt der Rand des Schutzfelds 4 so dicht am AGV 21a, b, dass sich keine Person unbemerkt zwischen Schutzfeldrand und AGV 21a, b aufhalten kann.

Die Überwachungsfunktion der Sensoranordnung 1 ist analog zu dem Beispiel gemäß den Figuren 7 und 8.

### Bezugszeichenliste

- (1): Sensoranordnung
- (2): Sicherheitssensor
- (2a): Gehäuse
- (3): Sicherheitssteuerung
- (4): Schutzfeld
- (4a): Warnfeld
- (5): Referenzkontur
- (6): Lichtstrahl
- (7): Sender
- (8): Empfänger
- (9): Objekt
- (10): Ablenkeinheit
- (10a, b): Spiegelfläche
- (11): Sockel
- (12): Messkopf
- (13): Sendereinheit
- (14): Bildsensor
- (15): Gefahrenbereich
- (16): Zutrittsöffnung
- (17): Boden
- (18): Kiste
- (19a-d): Lichtvorhang
- (20): Roboter
- (21a, b): AGV (Automatic Guided Vehicle)
- (100): Anlage
- (D): Drehachse

## Patentansprüche

1. Sensoranordnung (1) mit wenigstens einem Sicherheitssensor (2), der für eine Schutzfeld-Überwachung ausgebildet ist, **dadurch gekennzeichnet, dass** in einer Speichereinheit mehrere Schutzfelder (4) abgespeichert sind, welchen jeweils ein Warnfeld (4a) vorgelagert ist, oder welchen jeweils eine Referenzkontur (5) zugeordnet ist, dass in einem Einlernbetrieb mittels einer Rechnereinheit die gespeicherten Schutzfelder (4) im Sicherheitssensor (2) nacheinander aktiviert werden, bis mit einem aktivierten Schutzfeld (4) in dessen zugeordnetem Warnfeld (4a) ein Objekt (9) erkannt wird oder ein mit dessen Referenzkontur (5) übereinstimmendes Objekt (9) erkannt wird, wobei dieses Schutzfeld (4) für einen auf den Einlernbetrieb folgenden Arbeitsbetrieb im Sicherheitssensor (2) übernommen wird.

2. Sensoranordnung (1) nach Anspruch 1, **dadurch gekennzeichnet, dass** der Sicherheitssensor (2), ein optischer Flächendistanzsensor, eine 3D-Kamera oder ein Radarsensor ist, und/oder dass eine Sicherheitssteuerung (3) vorhanden ist, in welcher die Speichereinheit und die Rechnereinheit integriert sind.

3. Sensoranordnung (1) nach einem der Ansprüche 1 oder 2, **dadurch gekennzeichnet, dass** jedes Warnfeld (4a) an wenigstens einen Abschnitt des Randes des jeweiligen Schutzfelds (4) direkt angrenzt.

4. Sensoranordnung (1) nach einem der Ansprüche 1 bis 3, **dadurch gekennzeichnet, dass** ein Objekt (9) mit der Referenzkontur (5) als übereinstimmend erkannt gilt, wenn dessen Objektkontur innerhalb vorgegebener Toleranzgrenzen mit der Referenzkontur (5) übereinstimmt.

5. Sensoranordnung (1) nach einem der Ansprüche 1 bis 4, **dadurch gekennzeichnet, dass** ein Objekt (9) innerhalb der Referenzkontur (5) als erkannt gilt, wenn dieses außerhalb des Schutzfelds (4) liegt und die vom Objekt (9) stammenden Messwerte des Sicherheitssensors (2) nicht weiter als ein vorgegebener Grenzwert vom Rand des Schutzfelds (4) entfernt liegen.

6. Sensoranordnung (1) nach einem der Ansprüche 1 bis 5, **dadurch gekennzeichnet, dass** mit diesem ein Zutrittsschutz durchgeführt wird.

7. Sensoranordnung (1) nach Anspruch 6, **dadurch gekennzeichnet, dass** mit dem Schutzfeld (4) des wenigstens einen Sicherheitssensors (2) in dessen Arbeitsbetrieb eine Zutrittsöffnung (16) zu einem Gefahrenbereich (15) an einer Anlage (100) überwacht wird, wobei mit der Sensoranordnung (1) eine Sicherheitsfunktion ausgelöst wird, die die Anlage (100) stillsetzt, wenn innerhalb des Schutzfelds (4) ein Objekt (9) registriert wird.

8. Sensoranordnung (1) nach Anspruch 7, **dadurch gekennzeichnet, dass** die Zutrittsöffnung (16) von einem Boden (17) begrenzt ist, und dass der wenigstens eine Sicherheitssensor (2) so angeordnet ist, dass mit diesem der Boden (17) erfassbar ist, wobei für den Arbeitsbetrieb des wenigstens einen Sicherheitssensors (2) das Schutzfeld (4) ausgewählt ist, für welches mit dessen Warnfeld (4a) oder mit der zugeordneten Referenzkontur (5) der Boden (17) erfasst wird.

9. Sensoranordnung (1) nach einem der Ansprüche 7 und 8, **dadurch gekennzeichnet, dass** mit weiteren Sicherheitssensoren (2) der Gefahrenbereich (15) überwacht wird, und dass ein automatischer Wiederanlauf der Anlage (100) durchgeführt wird, wenn nach einem Objekteingriff im Schutzfeld dieses Schutzfeld (4) wieder frei wird und wenn mit den weiteren Sicherheitssensoren (2) kein Objekteingriff im Gefahrenbereich (15) detektiert wird.

10. Sensoranordnung (1) nach einem der Ansprüche 7 und 8, **dadurch gekennzeichnet, dass** ein Wiederanlauf der Anlage (100) durch einen Benutzer durchgeführt wird.

11. Sensoranordnung (1) nach Anspruch 8, **dadurch gekennzeichnet, dass** in der Zutrittsöffnung (16) auf dem Boden (17) Objekte (9) gelagert sind, wobei das Schutzfeld (4) für den Arbeitsbetrieb des wenigstens einen Sicherheitssensors (2) ausgewählt wird, mit dessen Warnfeld (4a) oder mit dessen zugeordneter Referenzkontur (5) die Objekte (9) zusammen mit dem Boden (17) erfasst werden, wobei insbesondere die Objekte (9) quaderförmig sind und mit definierten Lücken voneinander getrennt sind.

12. Sensoranordnung (1) nach einem der Ansprüche 1 bis 11, **dadurch gekennzeichnet, dass** mit dieser eine Flächenabsicherung durchgeführt wird.

13. Sensoranordnung (1) nach Anspruch 12, **dadurch gekennzeichnet, dass** in der Speichereinheit an einen Gefahrenbereich (15) angepasste Schutzfelder (4) abgespeichert sind, und dass bei wenigstens einem im Gefahrenbereich (15) vorhandenen nichtsicherheitskritischen Objekt (9) für den oder jeden Sicherheitssensor (2) das Schutzfeld (4) für den Arbeitsbetrieb ausgewählt wird, mit dessen zugeordnetem Warnfeld (4a) oder dessen zugeordneter Referenzkontur (5) das nichtsicherheitskritische Objekt (9) erfasst wird.

14. Sensoranordnung (1) nach einem der Ansprüche 12 oder 13, **dadurch gekennzeichnet, dass** mit dieser der Betrieb einer Anlage (100) nur dann freigegeben wird, wenn in dem Schutzfeld (4) des oder jedes Sicherheitssensors (2) kein sicherheitskritisches Objekt (9) registriert wird, und dass bei einer Fehlfunktion der Anlage (100) oder bei Erfassen eines sicherheitskritischen Objekts (9) im Schutzfeld (4) des oder jedes Sicherheitssensors (2) eine Sicherheitsfunktion generiert wird, mit der die Anlage (100) stillgesetzt wird.

15. Sensoranordnung (1) nach Anspruch 14, **dadurch gekennzeichnet, dass** ein automatischer Wiederanlauf der Anlage (100) erfolgt, wenn bei einer Anwesenheitskontrolle im Gefahrenbereich (15) mittels der Sicherheitssensoren (2) kein sicherheitskritisches Objekt (9) detektiert wird.
